Europäisches Patentamt

European Patent Office

Office européen des brevets

(11) Publication number: **0 277 660 B1**

## EUROPEAN PATENT SPECIFICATION

(45) Date of publication of patent specification: **04.08.93**   (51) Int. Cl.⁵: **B01D 63/16**, B01D 33/06

(21) Application number: **88101769.3**

(22) Date of filing: **20.12.84**

(60) Publication number of the earlier application in accordance with Art.76 EPC: **0 165 992**

(54) **Filtration method and apparatus.**

(30) Priority: **20.12.83 US 563319**

(43) Date of publication of application:
**10.08.88 Bulletin  88/32**

(45) Publication of the grant of the patent:
**04.08.93 Bulletin  93/31**

(84) Designated Contracting States:
**CH DE FR GB LI SE**

(56) References cited:
**EP-A- 0 112 152        WO-A-85/04112**
**DE-A- 2 251 644        GB-A- 1 480 406**
**US-A- 3 771 899        US-A- 3 870 639**

**ESCHER WYSS MITTEILUNGEN, February 1978 - January 1979, pages 24-30, Zürich, CH; J. LIEBERHERR: "Hydrodynamik der Ringspaltströmung zwischen permeablen Zylinderwänden"**

**ESCHER WYSS MITTEILUNGEN, February 1978 - January 1979, pages 21-23, Zürich, CH; W. TOBLER: "Dynamische Filtration - das apparative Konzept des Escher-Wyss-Druckfilters"**

**DESALINATION, vol. 35, 1980, pages 115-128, Elsevier Scientific Publishing Co., Amsterdam, NL; M. LOPEZ-LEIVA: "Ultrafiltration at low degrees of concentration polarization: technical possibilities"**

(73) Proprietor: **Membrex, Inc.**
**141 Lanza Avenue**
**Garfield, New Jersey 07026(US)**

(72) Inventor: **Shmidt, Iosif**
**2270 85th Street**
**Brooklyn New York 11214(US)**
Inventor: **Badiali, Mario**
**3515 Henry Hudson Parkway**
**Bronx New York 10463(US)**

(74) Representative: **Spence, Anne et al**
**Fry, Heath & Spence Mill House Wandle Road**
**Beddington Croydon Surrey CR0 4SD (GB)**

EP 0 277 660 B1

## Description

The present invention is a divisonal application from Application 85900547.2 - EP-A-0165992 and in its most general aspect relates to filtration methods and apparatus for same. More particularly, it relates to filtration methods employing semi-permeable membranes as the filtration media. Such methods include reverse osmosis, ultrafiltration, dialysis, electro-dialysis, water-splitting, pervaporation and microfiltration, and depend on certain components being much more permeable through the membrane than other components. The result of such filtration methods is to separate one or more substances by retaining some within a retentate while others are separated into a permeate. In the case of electrodialysis, certain ions are much more permeable through the membrane than other solution components. The valuable fraction may be either the concentrate, the permeate or, in some instances, both, depending on the particular application. In the microfiltration of beer and the desalination of brines, the permeate is the desired product. In the preparation of pharmaceutical intermediates wherein bacterial growth is carried out in an inert but acceptable medium, the concentrate is the valuation fraction.

Understanding of the invention will be facilitated by an initial consideration of filtration processes in their most general aspects. In terms of worldwide annual tonnages, mineral benefication processes are among the most prevalent of methods utilizing filtration. Typically, a mineral-bearing ore is ground to desired fineness and mixed with water and a variety of surface-active chemicals. Then, in a flotation cell, air is bubbled through the mixture, and the chemicals act to attach the non-mineral-bearing lighter particles to the bubbles, which form a froth, are passed over large rotating drums having coarse screens covered with a special canvas, and water is drawn out through the center of the drum with suction, and a filter cake is separated from the drum exterior, on each revolution and continously, with a doctor blade. Fine particles do find their way into the canvas, however, and this clogs or blinds the filter, preventing the separation from occurring and requiring a back-wash operation to continue the process (see, generally, Fuerstenau, Ed., "Flotation," Am. Inst. of Min. & Pet. Engs., New York, 1976).

Interestingly, the same principles that govern mineral separation in high froth flotation plants handling millions of tons of ore also apply to separations carried out in laboratories on centiliters of a raw solution using the most sophisticated equipment. Further, the same principles apply to separations of true solutions with no particulates involved (e.g., solutions with dissolved molecules such as salts, proteins, etc.). Of course, the filter media and the process conditions are more different, but the basic principles are the same.

In conventional separations with a stationary membrane the first condition is that the liquid mixture pass over a large area of filter media in a short time. The reason for this is apparent; total flux through the membrane is proportional to its area, and separation will occur only at the liquid-media boundary, ofter called the boundary layer. This boundary layer tends to retain rejected solute species, which are retarded from returning to the bulk solution. This leads to concentration polarization and in some cases to formation of gel layers.

Of course, what has made more fine separations possible is the development of sophisticated filter materials, known generally as semi-permeable membranes. In microfiltration, for example, micro-sized pore filters can filter out the bacteria that would otherwise spoil unrefrigerated beer, replacing pasteurization and making available storage-stable "real draught" beer in markets. In reverse osmosis filtration, brines and other polluted solutions can be rendered potable (usually after several treatments in seriatim) provided the system pressure on the filter medium exceeds the osmotic pressure. Specifically, tailored plastic and cellulosic materials form the filter media in such cases. In electro-dialysis filtration, similar media are used, but an electric charge - creating an effective cathode and anode - help propel the separation. Also, therapeutic dialysis is used to purify patient's blood. However, present systems are very expensive and are of limited availability.

As noted above, the clogging or blinding of filter media is a problem at any level of filtration, insofar as trans-membrane flow (flux) drops as the pores in the filter media become clogged. While scraping off a filter cake and backwashing the canvas will suffice in flotation separations, the problems multiply when one deals with finer separations. Gels (highly hydrated molecules also called flocs) can form. As solute concentration builds up at the boundary layer, chemical precipitation of colloidal-size particles can occur, a typical case being the precipitation of gypsum (hydrated calcium sulfate) from sea water.

Lopez-Leiva, Desalination, volume 35, pages 115-128 (1980), Elsevier Scientific Publishing Co., Amsterdam, NL shows a rotary filtration device. The introductory portion of claim 1 is based on this disclosure. However, the device is shown schematically, there is no indication of the lower extent of the membrane filtration area, and the device has top and bottom seals, the bottom one of which is in contact with process liquid.

The process of the invention is based, in part, on the discovery that a known hydrodynamic phenomena called Taylor vortices can, under properly controlled conditions, be generated in a rotating semi-permeable filtration apparatus, and that, such vortices help to maintain a clean membrane surface for continued operation. A surprising aspect of the invention is the low energy consumption achieved when the methodology of the invention is practiced.

Understanding of the invention will be facilitated if the Taylor vortex phenomenon is clearly understood. As discussed by Schlichting in Boundary-Layer Theory 7th Ed., McGraw-Hill, 1979, instabilities in fluid flow between concentric cylinders where only the inner cylinder is in motion were first investigated by Lord Rayleigh, who performed calculations based on the assumption that the fluid was non-viscous. Taylor, using a framework of linear theory and considering viscous fluids, found that when a certain Taylor' s number was exceeded, axially circumferential vortices appear, which rotate in alternately opposite directions.

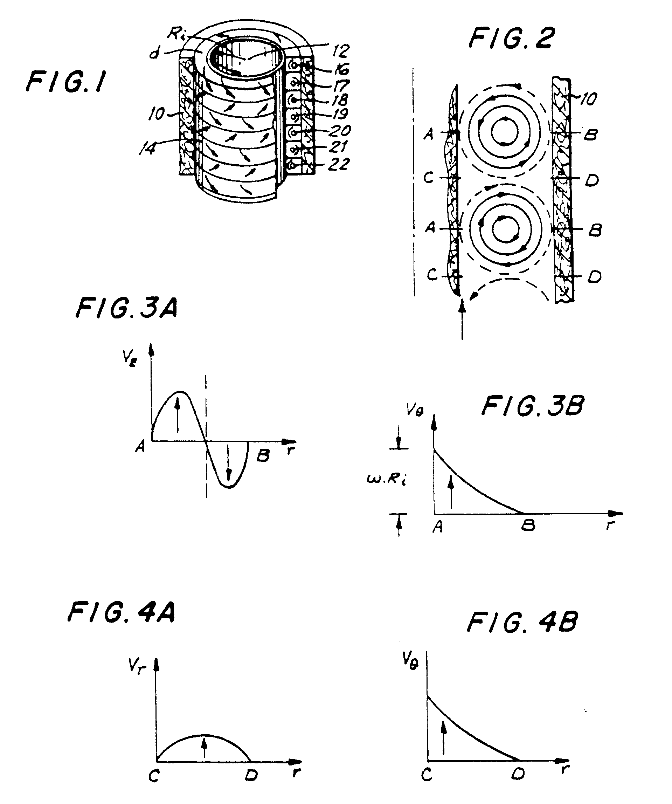

Attention is directed to Figures 1 to 5, which illustrate the phenomenon in simplified form. Specifically, an outer, stationary cylinder 10 is separated from an inner rotating cylinder 12 of radus $R_i$ by a gap d. The gap is filled with a fluid 14. Under the proper conditions, set forth below, vortices rotating clockwise (16, 18, 20, 22) and counter-clockwise (17, 19, 21) are set up. The present invention defines the conditions whereby these vortices are maintained while continuously withdrawing fluid permeate through the inner cylinder.

Taylor determined that the minimum condition for the establishment of such vortices, defined as the Taylor number ($T_a$) was

$$T_a = \frac{\mu_i d}{v} \sqrt{\frac{d}{R_i}} \geq 41.3 \quad (Eq.\ 1)$$

where v is the kinematic viscosity of the fluid, and $\mu_i$ is the peripheral velocity of cylinder 12.

Taylor and others determined that the vortices would persist in some cases at $T_a = 400$ and in other cases up to $T_a = 1700$, but that turbulence would ensue if the Reynolds number ($R_a$) rose above about 1000.

$$R_a = \frac{w(2d)}{v},$$

where w is axial velocity. More particularly, those skilled in hydrodynamics will appreciate that a time average velocity profile of fluid flow will generate a smooth curve, but an instantaneous velocity profile is very ragged. Thus, the Taylor vortices shown in Fig. 1 may be characterized as "main flow", but there will be a turbulent component of this, and as $T_a$ rises, the instantaneous turbulent velocity will ultimately become more important.

Understanding the invention as applied to filtration is facilitated by a more detailed consideration of an individual vortex between an inner wall 12 and an outer wall 10, and attention is directed to Fig. 2, where the points A, B denote positions on the respective inner and outer walls opposite the center of a vortex, and points C, D denote positions between a pair of vortices. Using cylindrical coordinates, vz = tangential velocity, $v_r$ = radial velocity and $v_0$ = angular velocity, it can be seen that $v_z$ describes a sine wave between points A and B, there being zero tangential velocity at the center of the torous, as Fig. 3A illustrates. For a counter-rotating torous, the curve is reversed. The radial velocity from C to D describes an arc, as shown in Fig. 4A.

The important fact here is that the sheer stresses due to tangential velocity, $v_z$, at one point A are in one direction and at the next point A are in the opposite direction. In a filtration device, the inner wall 12 is a semipermeable membrane and, because there is a net axial velocity due to the feeding and removal of permeate and concentrate, the individual vortices assume what appears to be a helical shape and move from the inlet to the outlet. Thus, the surface of the membrane is continuously "scoured" by the solution itself, and particulates, gels and colloids which would otherwise collect thereon are maintained in the solution.

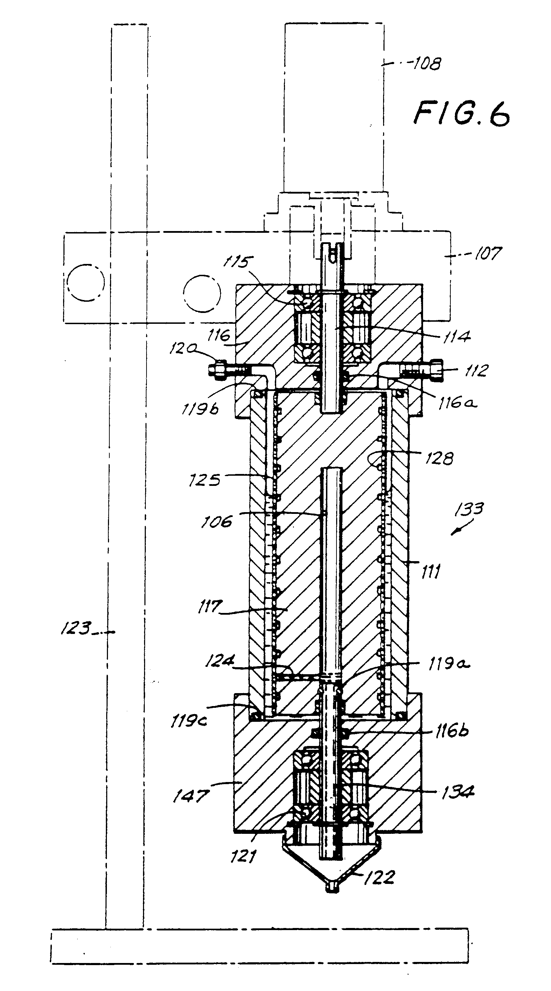

Figure 6 illustrates a limited volume filtration apparatus of the general kind used in the invention but which suffers from disadvantages like similar prior art apparatus. In this figure the filtration apparatus 133 is supported by a bracket 107 and is connected to a drive motor 108. Apparatus 133 contains a lower housing 147 and an upper housing 116 which together support an outer cylinder 111. Upper housing 116 has an inlet 112 through which feed liquid is inserted and, if desired, a pressurising gas may be supplied through said inlet. A drive shaft 114, operatively coupled to the drive motor 108, is supported in upper housing 116 by bearings 115. A dynamic seal 116a along the side of drive shaft 114 keeps the feed liquid within outer cylinder 111.

An inner cylinder 117 is formed with an outer surface having a grid of interconnecting narrow and shallow channels 128 connected by at least one radially extending hole 124 to a central bore 106 in cylinder 117. Bore 106 receives and communicates with a hollow shaft 134 supported by bearings 121 on housing 147. A membrane 125, constructed in the form of a flat sheet, is wrapped around cylinder 117, having its ends sealed and attached to cylinder 117 by means of transfer adhesive or liquid glue. Membrane 125 may also be constructed as a seamless sleeve dimensioned to fit over inner cylinder 117.

After transmembrane flow, permeate will flow by means of the grid of interconnected channels 128 in the outer wall of inner cyclinder 117 into hollow shaft 134 and then through a funnel 122 into a suitable collector (not shown). A static seal 119a between hollow shaft 118 and inner cylinder 117 prevents leakage of the pressurized feed liquid into bore 106, so that the feed liquid will not mix with the permeate. A dynamic seal 116b between shaft 118 and housing 147 also helps to separate the feed liquid from the permeate. Static seals 119b and 119c between inner cylinder 117 and lower housing 147 and upper housing 116 serve to separate the feed liquid from the permeate. A pressure relief valve 120 may be provided in upper housing 116.

In operation, part of the membrane may remain in contact with the pressurized feed liquid while the other part of the membrane will be in contact with the pressurized gas. If the apparatus is positioned in a vertical orientation so that the pressurized gas is above the feed liquid level, contact between the gas and an effective membrane area will produce an insignificant amount of transmembrane gas flow.

Thus the technical problem to be solved is to provide a rotary filtration device in which there is no bottom dynamic seal to contact the process liquid and the lower extent of the membrane filtration area is proximate the bottom parts of the housing.

## SUMMARY OF THE INVENTION

The present invention provides a rotary vertical filtration device for filtering a liquid sample into permeate and concentrate portions, the concentrate not filtered by the end of separation being the retentate, comprising:

a rotor member having a top portion, an essentially cylindrical or conical outer wall, a vertical, longitudinal central axis of rotation, and a bottom wall, any permeate removable from the rotor during rotation being removable only through the top portion;

a housing with a central cylindrical or conical cavity having a top, a side, and a bottom defined by a top housing member, an essentially cylindrical or conical housing inner wall larger in diameter than the rotor member, and a bottom housing member, the rotor member being rotatably connected to the housing and being within the cylindrical or conical cavity, the cavity having a substantially vertical, longitudinal axis substantially parallel to the longitudinal axis of the rotor member, the essentially cylindrical or conical housing inner wall corresponding to and being closely spaced from the corresponding portion of the cylindrical or conical outer wall of the rotor member to define an essentially cylindrical or conical narrow gap between said inner and outer walls;

a membrane that allows permeate to pass through it, the membrane being mounted on the cylindrical or conical outer wall of the rotor member or on the cylindrical conical inner wall of the housing or on both walls;

entry means to allow liquid to enter the gap, means to establish a differential across the membrane to aid the flow of permeate through the membrane; and

means to rotate the rotor member;

characterized in that the device has a dynamic seal (178; 184) being limited to the upper housing only; the membrane has a filtration area whose lower extent is proximate the bottom housing member; and the entry means is either the upper opening of the gap (d) or, if the means to establish said differential across the membrane is a pressurized gas, the entry means is optionally the gas inlet (177, 199) itself.

Preferably the means to establish a differential across the membrane to aid the flow of permeate through the membrane is a means to establish a pressure differential.

In a preferred form the membrane is mounted only on the inner wall of the housing.

With advantage the device is such that the permeate is collected inside the rotor and the rotor member is removable from the device for recovering the permeate.

The invention extends to a process for filtering liquid samples into permeate and concentrate portions which comprises placing liquid to be filtered in the gap of a device as above, rotating the rotor member to separate the liquid into permeate and concentrate portions, the rotor member being rotated at a speed such that the calculated Taylor number for liquid in the gap is greater than 40, and continuing the separation until the volume of retentate remaining in the cavity is equal to the minimum retentate volume of the cavity, the minimum retentate volume being that volume below which the retentate cannot be filtered because that volume is below the lower extent of the filtration area.

Preferably the process includes establishing a pressure differential across the membrane to aid the flow of permeate through the membrane.

With advantage the rotational speed of the rotor is varied to control the composition of the permeate.

BRIEF DESCRIPTION OF DRAWINGS

For a fuller understanding of the invention, reference is had to the following description, given by way of example only, taken in connection with the accompanying drawings, in which:

Fig. 1 is a simplified schematic perspective view, in partial section, of a pair of cylinders with a fluid therebetween, illustrating phenomena utilized in the process of the invention;

Fig. 2 is an enlarged view of a portion of Fig. 1, showing fluid flow in accordance with the above phenomena;

Figs. 3A and B are plots of tangential and angular velocities between A-B in Fig. 2;

Fig. 4A and B are plots of radial and angular velocities between C-D in Fig. 3;

Fig. 5 is similar to Fig. 2, and shows the additional effect of permeate being removed through the membrane;

Fig. 6 is a side elevational view in cross-section of an apparatus of the general kind used in the invention, but not in accordance with the invention, for carrying out filtration;

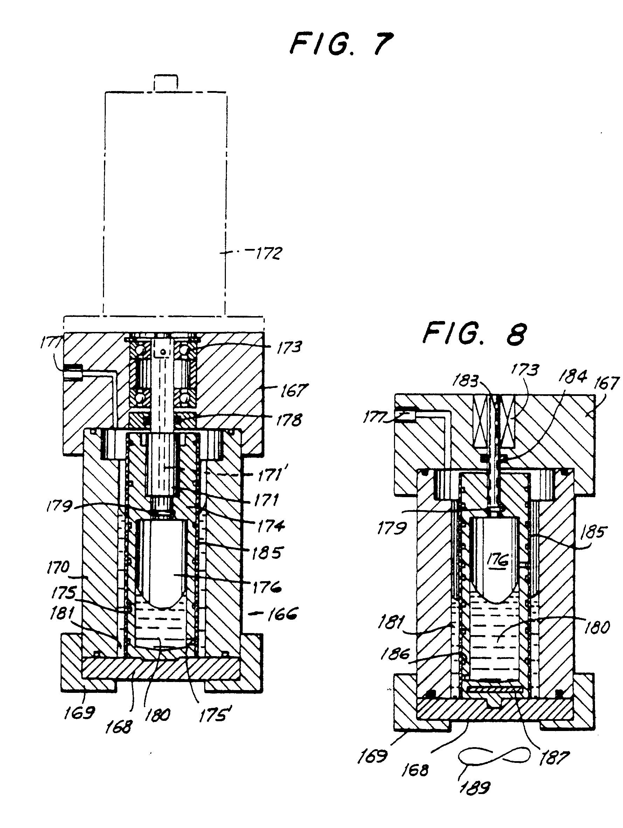

Fig. 7 is a side elevational view in cross-section of a first embodiment in accordance with the invention, particularly adapted for small volume separation;

Fig. 8 is a side elevational view in cross-section of a second embodiment in accordance with the invention, particularly adapted for small volume separation and having a magnetic rotation means; and

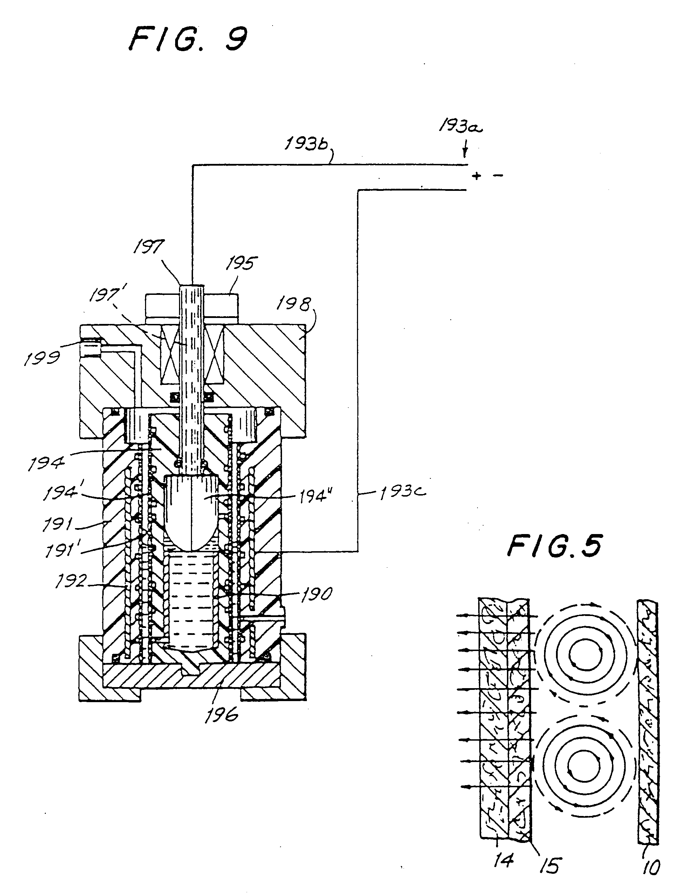

Fig. 9 is a partial side elevational view in cross-section of a third embodiment of the invention

DETAILED DESCRIPTION

The generalized system of filtration is shown similar to that described with reference to Fig. 6. Thus the stationary portions of the apparatus comprise a lower housing, and an upper housing including a gas line fitting and a central opening, to accommodate a drive shaft. The upper and lower housings hold between them an outer (stationary) cylinder which may be made of clear, strong plastic.

It is a feature of the invention that several interchangeable outer cylinders, all having the same outside diameter, but each having a different inside diameter, whereby gap d may also be varied. Also, some outer cylinders may be provided with an inlet and an outlet, so that filtrations involving recirculation of the feed can be carried out. The rotating portion of the apparatus in addition to the drive shaft comprises an inner cylinder. A feature of the inner cylinder is that it includes a vertical slot for accommodating the ends of a membrane wrapped therearound, and that it be somewhat compliant, e.g., the slot can be opened a bit for insertion of the membrane ends, but will normally be sealed tightly.

Adaptability of the apparatus to efficient separation of small samples is clear. Even when the sample does not fill the space between the inner and outer cylinders, a large membrane area relative to the available fluid is presented, and gas pressure can serve to pressurize the sample and aid filtration. Separation is fast, and there is virtually no volume limit to permeate recovery.

Utility of the general type of apparatus of this invention is illustrated by specific examples given in the above mentioned EP-A-0165992.

In most conventional membrane separation processes, the membrane is located at the bottom of a vessel, the fluid is poured in, and a magnetic stirring bar provides agitation. Such a stirring bar must be kept at a distance, however small, from the membrane surface and yet have at least some of its structure submerged to obtain any reasonable mixing and for effective separation to occur. In a situation where the sample volume is small and high permeate recovery is required, the only answer is to use a very narrow vessel with a correspondingly small-area membrane at the bottom. This makes for a very slow separation.

Attention is now directed to the optimization of a filtration procedure using the method and apparatus of the invention.

The feed solution, with its own viscosity, is a "given". With the apparatus of the invention, gap d and velocity are variable. Generally, a variety of semipermeable membranes will be available but this is not always the case.

The next step is to optimise the Taylor number. With some fluids the Taylor votices are readily observable but, if not, adding some aluminium powder is a handy expedient. This is a matter of trial. If the membrane becomes coated with a gel at $T_a$ = 50 but stays clear at $T_a$ = 250, the latter is selected.

Of course, varying gap d has a second-order affect on $T_a$, as equation 1 makes clearly. it should be kept in mind that as d gets smaller (and $T_a$ decreases) the vortices will be more intense, and energy consumption will also rise.

The goals of establishing the general procedure are clear: the desired permeate, no fouling of the membrane, a good flux through the membrane, and, within these constraints, minimal energy consumption, which means the slowest rotation that is compatible with the desired permeate and flux-criteria.

Two further aspects of the invention are worthy of note. One is that, because of the significant force involved during operation, a unit such as shown in Fig. 6 can be operated vertically, horizontally or even tilted at an angle. Secondly, because of the wide range of allowable values of $T_a$, the two cylinders need not be concentric. For example, one or the other or both could be a section of a cone, or the axis of the inner cylinder could be offset from that of the outer cylinder. Even though it is known that the Taylor vortices will survive such manipulation, the effect thereof on specific separations must be determined.

While the device of Fig. 6 is not in accordance with the invention the general principles of its operation and parts thereof may be applied to understand or vary the specific embodiments of Figs. 7 to 9 within the scope of the invention.

Referring now to Fig. 7, a mini device in accordance with the present invention for providing a membrane-based separation apparatus for processing small volumes of liquid, is disclosed. By way of example, the mini device of Fig. 7 may be used to separate a liquid into a permeate and a retentate (concentrate), when said liquid is a small volume liquid sample as found in clinical laboratories (e.g., blood samples, blood plasma, urine sample, etc.). It may also be employed for other small volume liquid samples as occur in research and analytical laboratories.

In devices having a dynamic bottom seal, the holdup (dead) volume in that apparatus is the volume of liquid required to fill the apparatus from the lower dynamic seal up to the level of the lower end of the effective membrane area. The materials of the lower dynamic seal and the lower hollow shaft represent a constraint on the types of possible separations which may be achieved. For example, an ethylenepropylene O-ring used as the lower dynamic seal has poor resistance to fatty acids.

In the preferred embodiment of Fig. 7, the holdup (dead) volume is decreased and the lower dynamic seal and the lower hollow shaft are eliminated. As illustrated, the mini device of Fig. 7 permits the permeate to be collected inside of the inner hollow cylinder. The permeate, instead of being removed from a hollow inner cylinder continuously through the hollow bottom shaft is retained within the hollow inner cylinder of the device until the termination of the separation process. Thereafter, said cylinder, including its affixed membrane, is removed from the mini device and the collected fluid is removed.

Particular features of the mini device include simple construction, very small holdup (dead) volume, only one dynamic seal out of contact with the process liquid, reduced risk of foreign body contamination of the process fluid and ease of device operation.

As illustrated in Fig. 7, the mini device 166 includes a drive means, which may be direct or indirect, in this case an electrical, magnetic or air driven motor 173, attached to a stationary upper housing 167. The stationary portions of the apparatus are upper housing 167, a lower housing 168, a cap 169 and an outer cylinder 170 supported between housing 167 and housing 168. A shaft 171, formed with a passageway 171' which is vented to the atmosphere, is coupled to a motor 172 and rotatably supported in housing 167 by means of bearings 173. An inner cylinder 174 with a membrane 185 thereon is supported on shaft 171. Inner cylinder 174 has its surface covered by a grid of narrow interconnecting, shallow channels 175 coupled to an inner chamber 176, by at least one hole radially extending to 175'. A membrane 185, originally constructed as a flat sheet, is wrapped around and secured to inner cylinder 174. Membrane 185 may also be in the form of a seamless sleeve for fitting around inner cylinder 174.

Permeate 180 which has passed through the membrane, flows through channels 175 into inner chamber 176. The feed liquid 181, which is placed between inner cylinder 174 and outer cylinder 170, is pressurized by means of a suitable gas supplied through an inlet 177. A dynamic seal 178 between upper housing 167 and rotating hollow shaft 171 prevents any sizeable leakage of pressurized gas supplied through inlet 177. An O-ring 179 provides a seal between shaft 171 and cylinder 174.

The pressure inside hollow cylinder 174 is preferably kept equal to atmospheric pressure since shaft 171 is hollow, with its upper end exposed to the atmosphere.

Accumulated permeate is retained within the inner chamber of cylinder 174 until completion of the separation process. Thereafter, inner cylinder 174 is disconnected from shaft 171. The permeate as well as the retentate (concentrate) is then recovered. Shaft 171 permits recovery of the permeate during the separation process since it is formed with a passageway 171'.

In a further embodiment shown in Fig. 8, like referred numerals being applied to like elements of Fig. 7, an inner cylinder 186 of a mini-device is rotated by a magnetic device 189. A magnetic element 187, supported on inner cylinder 186, is rotated by magnetic coupling with a magnetic drive device 189. Since the diameter of hollow shaft 183 is small, the friction in a dynamic seal 184 along the side of shaft 183 is reduced and easily overcome by the magnetic drive.

Pressure differential is generated typically by an applied pressure, preferably from a pump or pressurized gas, upon the feed liquid, but also can be generated partly or exclusively by a vacuum applied to the permeate stream.

Referring now to Fig. 9, an apparatus in accordance with the invention is described which employs an electric field as the primary or additional force for generating a transmembrane permeate flow across at least one of membranes 194' and 191' attached respectively to an inner cylinder 194 and an outer cylinder 191. Inner cylinder 194 houses a cylindrical inner electrode 190 mounted in inner chamber 194, while outer cylinder 191 houses an outer cylindrical electrode 192. Electrodes 190 and 192 are connected to a suitable external electric field source 193a by leads 193b and c, respectively. The apparatus includes an upper housing 198 and a lower housing 196 which together support outer cylinder 191. Housing 198 has an inlet 199 for pressurizing feed liquid.

Inner cylinder 194 with a suitable membrane thereon has a shaft 197 inserted therein formed with a passageway 197' therethrough for venting. Both inner cylinder 194 and shaft 197 are rotated by rotating means 195. If outer cylinder 191 also has a membrane 191' thereon, and electrode 190 cannot be imbedded in the outer cylinder as shown, then the area between the outer electrode and the backside of the outer membrane should be made of electro-conducting matter such as a suitable electrolyte solution, metal, or electro-conducting polymer. Additionally, at the start of operation, a limited amount of electro-conduction material, as electrolyte solution, may be placed within inner cylinder 194 for making contact with inner electrode 190.

The apparatus described and illustrated can also have two individual membrane components; one attached to the outer surface of an inner cylinder and one attached to the inner surface of an outer cylinder. The two membranes (i.e., the inner and outer membranes) may be constructed from the same material in order to increase, for example, the total effective membrane material area and thereby the total transmembrane flow. Alternatively, the two membranes may be of different composition and/or structure in order to permit separation of different feed substances, wherein each membrane acts somewhat differently toward substances dissolved or suspended within the feed stream.

For example, the difference between the two membranes may be such that one is hydrophobic and the other hydropilic; or one may be positively charged (e.g., fixed or adherent chemical, cationic charged groups) while the other may be negatively charged (e.g., fixed or adherent chemical, anionic charged groups); or one membrane may contain certain fixed or adherent structures of a bio-affinity type differing from those of the other membrane. Also, compound separation principles may be employed including the utilization of pore size exclusion.

Additionally, one can take advantage of the inherent centrifugation effect of the apparatus. Where the feed stream contains substances of differing densities, lighter, less dense materials would tend to be concentrated and then filtered preferentially by the inner membrane (i.e., the membrane at the outer surface of the inner cylinder), while more dense materials would tend to be concentrated and filtered by the outer membrane (i.e., the membrane attached to the inner surface of the outer cylinder) during operation.

In the specific use of emulsion separations (e.g., oil droplets - micells in water), one can take advantage of the difference in density between oil and water, the hydrophobic nature of the oil, and the ionic nature of the micel surface.

It is understood that all the devices described in the accompanying drawings are applicable to any filtration method in which a spinning surface is employed. These include ultrafiltration, microfiltration, reverse osmosis, pervaporation, dialysis, electrodialysis and water splitting. They are also applicable to systems employing plural rotating cylinders and plural stationary cylinders.

Additionally, it is understood that the rotatable inner cylinder may be constructed of a porous material such as glass, ceramic, sintered metal or an organic substance which may effectively operate to filter.

7

**Claims**

1. A rotary vertical filtration device for filtering a liquid sample into permeate and concentrate portions, the concentrate not filtered by the end of separation being the retentate, comprising:

   a rotor member (174) having a top portion, an essentially cylindrical or conical outer wall, a vertical, longitudinal central axis of rotation, and a bottom wall, any permeate removable from the rotor during rotation being removable only through the top portion;

   a housing (170) with a central cylindrical or conical cavity having a top, a side, and a bottom defined by a top housing member (167), an essentially cylindrical or conical housing inner wall larger in diameter than the rotor member, and a bottom housing member (168), the rotor member (174) being rotatably connected to the housing and being within the cylindrical or conical cavity, the cavity having a substantially vertical, longitudinal axis substantially parallel to the longitudinal axis of the rotor member, the essentially cylindrical or conical housing inner wall corresponding to and being closely spaced from the corresponding portion of the cylindrical or conical outer wall of the rotor member to define an essentially cylindrical or conical narrow gap between said inner and outer walls;

   a membrane (185) that allows permeate to pass through it, the membrane being mounted on the cylindrical or conical outer wall of the rotor member or on the cylindrical conical inner wall of the housing or on both walls;

   entry means to allow liquid (181) to enter the gap, means to establish a differential across the membrane to aid the flow of permeate through the membrane; and

   means (171, 172) to rotate the rotor member;

   characterized in that the device has a dynamic seal (178; 184) being limited to the upper housing only; the membrane has a filtration area whose lower extent is proximate the bottom housing member; and the entry means is either the upper opening of the gap (d) or, if the means to establish said differential across the membrane is a pressurized gas, the entry means is optionally the gas inlet (177, 199) itself.

2. A device according to Claim 1 characterized in that the means to establish a differential across the membrane to aid the flow of permeate through the membrane is a means (177) to establish a pressure differential.

3. A device according to Claim 1 or Claim 2 characterized in that the membrane is mounted only on the inner wall of the housing.

4. A device according to Claim 1 or Claim 2 in which the permeate is collected inside the rotor and the rotor member is removable from the device for recovering the permeate.

5. A process for filtering liquid samples into permeate and concentrate portions which comprises placing liquid to be filtered in the gap of a device according to any of Claims 1 to 4, rotating the rotor member to separate the liquid into permeate and concentrate portions, the rotor member being rotated at a speed such that the calculated Taylor number for liquid in the gap is greater than 40, and continuing the separation until the volume of retentate remaining in the cavity is equal to the minimum retentate volume of the cavity, the minimum retentate volume being that volume below which the retentate cannot be filtered because that volume is below the lower extent of the filtration area.

6. A process according to Claim 5 which includes establishing a pressure differential across the membrane to aid the flow of permeate through the membrane.

7. A process according to Claim 5 or Claim 6 characterized by varying the rotational speed of the rotor to control the composition of the permeate.

**Patentansprüche**

1. Eine vertikale Drehfiltrationsvorrichtung zum Filtrieren von Flüssigkeitsproben in ein Filtrat und ein Konzentrat, wobei das am Ende der Trennung nicht abgefilterte Konzentrat als Rückstand verbleibt, mit:

   einem Rotorkörper (174) mit einem Oberteil, einer im wesentlichen zylindrisch oder konisch ausgebildeten Außenwand, einer vertikalen, zentralen Längsdrehachse und einer Bodenwand, wobei jedes aus dem Rotor entfernbare Filtrat während des Drehens ausschließlich durch das Oberteil

EP 0 277 660 B1

entfernbar ist;

einem Gehäuse (170) mit einem zentralen, zylindrisch oder konisch ausgebildeten Hohlraum mit einer Decke, einer Seite und einem Boden, die durch ein oberes Gehäuseteil (167) begrenzt sind, einer im wesentlichen zylindrisch oder konisch ausgebildeten Gehäuseinnenwand mit einem größeren Durchmesser als der Rotorkörper und

einem unteren Gehäuseteil (168), wobei der Rotorkörper (174) drehbar mit dem Gehäuse verbunden ist und sich innerhalb des zylindrisch oder konisch ausgebildeten Hohlraums befindet, der eine im wesentlichen vertikale Längsachse aufweist, die parallel zu der Längsachse des Rotorkörpers verläuft, und die im wesentlichen zylindrisch oder konisch ausgebildete Gehäuseinnenwand dem Teil der zylindrisch oder konisch ausgebildeten Außenwand des Rotorkörpers entspricht und mit nur geringem Abstand dazu angeordnet ist, um einen im wesentlichen zylindrisch oder konisch ausgebildeten schmalen Spalt zwischen der Innen- und Außenwand festzulegen;

einer Membran (185), die das Filtrat passieren läßt und an der zylindrisch oder konisch ausgebildeten Außenwand des Rotorkörpers oder an der zylindrisch oder konisch ausgebildeten Innenwand des Gehäuses oder an beiden Wänden angebracht ist;

einem Einlaß zum Einleiten der Flüssigkeit (181) in den Spalt, Mittel zum Aufbau eines Differentials an der Membran zur Unterstützung des Filtratflusses durch die Membran hindurch und

Mittel (171,172) zum Drehen des Rotorkörpers;

dadurch gekennzeichnet, daß die Vorrichtung eine dynamische Dichtung (178,184) aufweist, die ausschließlich durch das obere Gehäuse begrenzt ist, daß die Membran einen Filterbereich aufweist, dessen untere Erstreckung bis in unmittelbare Nähe des unteren Gehäuseteils reicht, und daß der Einlaß entweder die höher gelegene Öffnung des Spaltes (d) ist oder, wenn es sich bei den Mitteln zum Aufbau eines Differentials an der Membran um Druckgas handelt, der Einlaß der Gaseinlaß (177,199) selbst ist.

2.  Vorrichtung nach Anspruch 1, dadurch gekennzeichnet, daß die Mittel zum Aufbau eines Differentials an der Membran zur Unterstützung des Filtratflusses durch die Membran hindurch Mittel (177) zur Erzeugung einer Druckdifferenz sind.

3.  Vorrichtung nach Anspruch 1 oder 2, dadurch gekennzeichnet, daß die Membran ausschließlich an der Innenwand des Gehäuses befestigt ist.

4.  Vorrichtung nach Anspruch 1 oder 2, dadurch gekennzeichnet, daß das Filtrat innerhalb des Rotors gesammelt wird und das Rotorteil zur Entfernung des Filtrats aus der Vorrichtung entfernbar ist.

5.  Verfahren zum Filtrieren von Flüssigkeitsproben in ein Filtrat und ein Konzentrat, wobei die zu filtrierende Flüssigkeit in den Spalt einer Vorrichtung nach einem der Ansprüche 1 bis 4 eingebracht wird, wobei der Rotorkörper zum Trennen der Flüssigkeit in Filtrat und Konzentrat mit einer solchen Geschwindigkeit gedreht wird, daß die berechnete Taylorzahl für die Flüssigkeit im Spalt größer 40 ist und die Trennung so lange forgeführt wird, bis das Volumen des Rückstandes in dem Hohlraum gleich dem minimalen Rückstandsvolumen in dem Hohlraum ist, wobei das minimale Rückstandsvolumen das Volumen ist, unterhalb dessen der Rückstand nicht mehr gefiltert werden kann, weil das Volumen unterhalb der unteren Erstreckung des Filtrationsbereichs liegt.

6.  Verfahren nach Anspruch 5, dadurch gekennzeichnet, daß eine Druckdifferenz an der Membran zur Unterstützung des Filtratflusses durch die Membran hindurch aufgebaut wird.

7.  Verfahren nach Anspruch 5 oder 6, dadurch gekennzeichnet, daß die Drehgeschwindigkeit des Rotors zur Steuerung der Filtratzusammensetzung geändert wird.

**Revendications**

1.  Dispositif de filtration vertical rotatif pour filtrer un échantillon de liquide en des parties perméat et concentré, le concentré non filtré à la fin de la séparation étant le rétentat, comprenant :

un élément rotor (174) ayant une partie supérieure, une paroi extérieure pratiquement cylindrique ou conique, un axe de rotation central longitudinal, vertical, et une paroi de fond, tout perméat pouvant être retiré du rotor pendant la rotation étant retiré seulement par la partie supérieure ;

un boîtier (170) avec une cavité centrale cylindrique ou conique ayant un dessus, un côté et un

9

fond définis par un élément boîtier supérieur (167), une paroi intérieure de boitier sensiblement cylindrique ou conique d'un diamètre plus grand que l'élément rotor, et un élément boîtier inférieur (168), l'élément rotor (174) étant fixé au boîtier de manière à pouvoir tourner et se trouvant à l'intérieur de la cavité cylindrique ou conique, la cavité ayant un axe longitudinal, sensiblement vertical, sensiblement parallèle à l'axe longitudinal de l'élément rotor, la paroi intérieure de boîtier sensiblement cylindrique ou conique correspondant à, et se trouvant très près de, la partie correspondante de la paroi extérieure cylindrique ou conique de l'élément rotor pour définir un espace étroit pratiquement cylindrique ou conique entre lesdites parois intérieure et extérieure ;

une membrane (185) qui laisse passer le perméat à travers elle, la membrane étant montée sur la paroi extérieure cylindrique ou conique de l'élément rotor ou sur la paroi intérieure cylindrique ou conique du boitier ou sur les deux parois ;

un moyen d'entrée pour permettre au liquide (181) de pénétrer dans l'espace, un moyen pour établir un différentiel à travers la membrane pour faciliter l'écoulement du perméat à travers la membrane ; et

un moyen (171, 172) pour faire tourner l'élément rotor ;

caractérisé en ce que le dispositif comporte un joint dynamique (178 ; 184) qui est limité au seul boîtier supérieur ; en ce que la membrane a une zone de filtration dont la limite inférieure est proche de l'élément du boîtier inférieur ; et en ce que le moyen d'entrée est, soit l'ouverture supérieure de l'espace (d), soit, si le moyen pour établir ledit différentiel à travers la membrane est un gaz sous pression, le moyen d'entrée est éventuellement l'orifice d'entrée de gaz (177, 199) lui-même.

**2.** Dispositif selon la revendication 1, caractérisé en ce que le moyen pour établir un différentiel à travers la membrane pour favoriser l'écoulement du perméat à travers la membrane est un moyen (177) pour établir un différentiel de pression.

**3.** Dispositif selon la revendication 1 ou la revendication 2, caractérisé en ce que la membrane est montée seulement sur la paroi intérieure du boîtier.

**4.** Dispositif selon la revendication 1 ou la revendication 2, caractérisé en ce que le perméat est collecté à l'intérieur du rotor et que l'élément rotor est démontable du dispositif pour récupérer le perméat.

**5.** Procédé de filtration d'échantillons liquides en des parties perméat et concentré qui comprend la mise en place d'un liquide à filtrer dans l'espace d'un dispositif selon l'une quelconque des revendications 1 à 4, la rotation de l'élément rotor pour séparer le liquide en parties perméat et concentré, l'élément rotor étant entraîné en rotation à une vitesse telle que le nombre de Taylor calculé pour le liquide dans l'espace soit supérieur à 40, et la poursuite de la séparation jusqu'à ce que le volume de rétentat restant dans la cavité soit égal au volume de rétentat minimal de la cavité, le volume de rétentat minimal étant le volume au-dessous duquel le rétentat ne peut pas être filtré parce que ce volume est au-dessous de la limite inférieure de la zone de filtration.

**6.** Procédé selon la revendication 5, qui comprend l'établissement d'un différentiel de pression à travers la membrane pour favoriser l'écoulement du perméat à travers la membrane.

**7.** Procédé selon la revendication 5 ou la revendication 6, caractérisé en ce que la vitesse de rotation du rotor soit modifiée pour commander la composition du perméat.

FIG.1

FIG.2

FIG.3A

FIG.3B

FIG.4A

FIG.4B

FIG.6

## FIG. 7

## FIG. 8

# FIG. 9

# FIG.5